# EUROPEAN PATENT SPECIFICATION

(11) **EP 4 396 784 B1**
(45) Date of publication and mention of the grant of the patent: **08.04.2026**
(21) Application number: 22863729.4
(22) Date of filing: 26.08.2022
(51) Int. Cl.: G06T 17/00, G01S 13/02, G06V 20/64, A63B 24/00, G06V 10/82, G06V 40/20

(54) **DEEP LEARNING METHOD OF DETERMINING GOLF CLUB PARAMETERS FROM BOTH RADAR SIGNAL AND IMAGE DATA**
TIEFENLERNVERFAHREN ZUR BESTIMMUNG VON GOLFSCHLÄGERPARAMETERN AUS SOWOHL RADARSIGNAL- ALS AUCH BILDDATEN
PROCÉDÉ D'APPRENTISSAGE PROFOND PERMETTANT DE DÉTERMINER DES PARAMÈTRES DE CLUB DE GOLF À PARTIR D'UN SIGNAL RADAR ET DE DONNÉES D'IMAGE

(30) Priority: 31.08.2021 US 202117462259
(43) Date of publication of application: 10.07.2024
(73) Proprietor: Rapsodo Pte. Ltd., Singapore 139964 (SG)
(72) Inventor: OKUR, Batuhan, Singapore 259289 (SG); TEKET, Osman Murat, Singapore 596182 (SG); GOPALAKRISHNAN, Roshan, Singapore 200804 (SG); VIJAYANAND, Lodiya Radhakrishnan, Singapore 319583 (SG)
(74) Representative: Forresters IP LLP
(86) International application number: PCT/IB2022/058025
(87) International publication number: WO 2023/031747

(56) References cited:
- US-A1- 2013 304 417
- US-A1- 2014 342 844
- US-A1- 2014 342 844
- US-A1- 2020 282 283
- US-A1- 2020 282 283
- US-A1- 2021 170 257
- US-A1- 2021 220 718
- US-A1- 2021 220 718

## Description

The embodiments discussed in the present disclosure are related to deep learning methods of determining golf club parameters from both radar signal and image data.

### BACKGROUND

There are two main approaches for existing golf launching monitors: radar based or vision (camera) based. The vision-based solution may be cheaper and may work similarly well both indoor and outdoor; the vision-based solution may be better suited to measure certain parameters, e.g. the lie angle, that the radar-based monitors may have a more difficult time measuring. The vision-based solution may also provide more accurate results for some key parameters, such as total spin and spin axis. Alternatively, or additionally, radar-based solution may be implemented for either right- or left-handed players and may be capable of jointly determining club parameters with the vision-based solution. Described in some embodiments of the present disclosure is a combination of a radar based and vision-based solution for both club and ball measurement.

Placement of additional stickers on the club face may improve the robustness of the vision-based solution but may include additional cost and work for the users and affects the appearance of the club, which may be less desirable for the users. Moreover, stickers placed on the club face may be susceptible to wear.

In some circumstances, to fully understand the golf launching results, high speed cameras, e.g. with 1000 FPS, have been used to capture the movement of club and ball near the impact instance. This may help coaches and players to better relate the club movement and the impact on the ball, which can lead to the improvements in performance. However, this solution requires expensive hardware, and the video can be only viewed from one specific angle, with fixed resolution.

There are two categories of measurement in golf launch monitoring: the ball parameters and the club parameters. The present description is mainly related to the measurement of the club parameters, as the measurement of ball parameters has been covered in previous disclosures such as US 9,171,211 B2.

The measurement of full 3D postures (position and orientation) of the club head during hitting is a challenging task for camera-based systems because of the lack of consistent distinguishing features across so many different kinds of club heads. To handle this problem, one known system (described in Patent US 8,951,138 B2, for example), puts the camera at the side of the player and require the player to put special stickers on the club face for detection and measurement. This approach can be troublesome to the player, and changes appearance of the club head.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

A combined radar and vision-based, golf launch monitoring system is provided without any requirement of additional markers, which may provide a more desirable solution for golfers. This golf launch monitoring system may measure the club head movement and orientation from the back of the player or side of the player without any requirement of additional markers/stickers. In other embodiments, a marker may be placed on the club shaft in order to simplify hardware requirements.

With a full 3D model of the club head, a simple model of the ball and accurate measurement of their respective movements, a 3D model of the launching scene can be fully reconstructed in high fidelity. Using existing computer graphics method, this 3D model can re-generate graphics of the launching scene to be replayed at any viewing angle, with any frame rate and with any resolution. The 3D model may allow the user to interact with the graphics and may use known hardware components.

By placing the vision-based measurement device and/or the radar-based measurement device behind the player (i.e., behind the golf ball) and/or to the side of the player, the system can be used for both left-handed and right-handed players without any discrimination, as the radar-based measurement device may be employed for either rightor left-handed players. The measurement device can be located at a safe distance away from the action zone, and it may not introduce distractions to the player.

By means of 3D scanning of the club head and consequent measurement of its 3D movement, the full sequence of the club and ball movement can be accurately measured and fully reconstructed in 3D without the requirement of putting special stickers on the club face. This 3D reconstruction then allows the user to view the action from any perspective, with whatever resolution and frame rate. For example, a slow-motion effect which is currently only possible with a high-end 1000 FPS camera can be achieved. The 3D reconstruction also allows the user to interact with the replay. Scanning the club head in 3D enables the roll and bulge of the club face of woods and drivers to be compensated.

### BRIEF DESCRIPTION OF THE DRAWINGS

Example embodiments will be described and explained with additional specificity and detail through the use of the accompanying drawings in which:
FIG. 1 is a block diagram of a golf launch monitoring system;
FIG. 2 is a block diagram of the measuring device of FIG. 1;
FIG. 3 is a flow diagram of a measurement procedure that may be used in the system of FIG. 1;
FIG. 4 is a diagram of a known club head, identifying parts thereof;
FIG. 5illustrates images of a stereo image pair (background removed) showing a driver and ball before impact;
FIG. 6 is an illustration of a marker exhibiting a phase shift pattern of grayscale changes, with a sine wave superimposed thereon;
FIG. 7A and FIG. 7B are images of a stereo image pair of a marker on the shaft;
FIG. 8A and FIG. 8B are images of an image pair showing observed phase shift patterns for left and right images;
FIG. 9 is an image illustrating Lambertian reflectance of a cylindrical object in accordance with a theoretical model;
FIG. 10 is an image of a marker provided with a reference band to enable reflectance variation removal;
FIG. 11A is an image of one suitable phase shift pattern;
FIG. 11B is an image of another suitable phase shift pattern;
FIG. 12 is an image of phase shift pattern modulated in two dimensions;
FIG. 13 is an image of a stacked 2D modulated phase pattern for better robustness and accuracy;
FIG. 14 is a diagram illustrating estimation of impact from the golf ball movement;
FIG. 15 is a diagram showing face angle variation on woods depending on club face location. Variation can occur both horizontally and vertically for both woods and drivers;
FIG. 16 is a block diagram illustrating 3D reconstruction of the full launching scene;
FIG. 17 is a block diagram of another embodiment of the measuring device of FIG. 1;
FIG. 18 is a flow diagram showing additional club scanning details;
FIG. 19 is a flow diagram showing additional details of club and ball measurement;
FIG. 20 is a flow diagram showing additional details of trajectory measurement;
FIG. 21 is a block diagram of an alternative golf launch monitoring system;
FIG. 22 is a time-frequency image of a club in motion;
FIG. 23A is a series of images of a club captured by a camera;
FIG. 23B is an example of measured points displayed in a table format of a club captured in FIG. 22A; and
FIG. 24 is flow diagram of an example method of determining golf club parameters.

### DETAILED DESCRIPTION

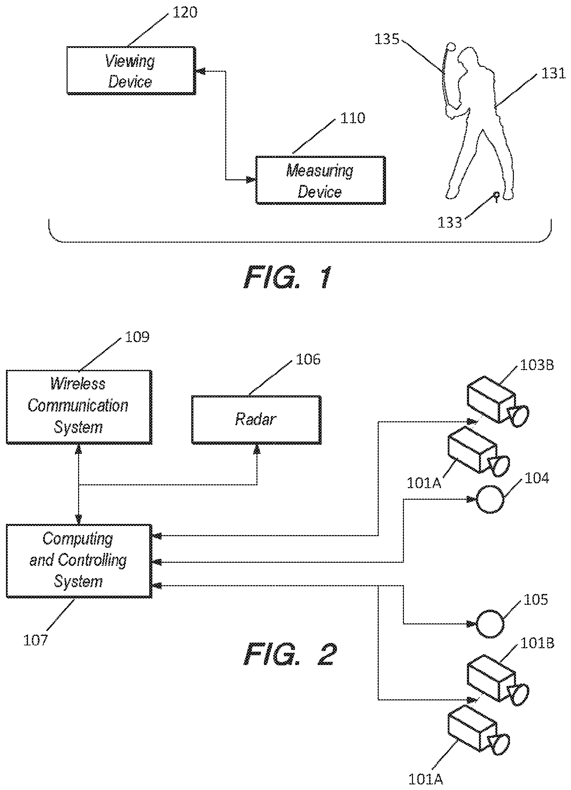

Referring to FIG. 1, a block diagram is shown of a golf launch monitoring system, showing the system setup. A measurement device 110 is positioned on the floor or ground behind the golfer 131 (e.g., behind the golf ball 133), who uses a golf club 135 to strike the golf ball. Processing of data can be further done through a cloud service. A viewing device 120 is provided for the user to visualize the measurement results. Alternatively or additionally, the measurement device 110 may be positioned to a side of the golfer 131.

FIG. 2 illustrates a block diagram of the measuring device 110 in accordance with one embodiment. In one embodiment, the measurement device may include four cameras. Two higher-speed, lower resolution cameras 101A, 101B form a stereo system for measurement of the club and ball movement during the swing, and two slower-speed, higher-resolution cameras 103A, 103B form another stereo system for measurement of the ball trajectory. In this embodiment, the system also includes an additional lighting system 104 to ensure properly lit images, a structured lighting module 105 for 3D scanning of the club head, a radar system 106 for providing timing and sequencing of image capture by the cameras, a computing sub-system 107 that performs some real-time processing, and a wireless communication sub-system 109 to send data to the viewing device.

The measurement of the launching scene is mainly based on the first pair of cameras 101A, 101B, which is supported by a lighting system 104 and a structured lighting module 105 for 3D scanning of the club head. The second pair of cameras 103A, 103B may be used for measurement of the golf ball trajectory, details of which will not be described herein. The radar unit 106 may be used to detect the starting of the player's swing to trigger the working of the cameras. Precise timing and synchronization of the cameras may be done by the computing and controlling system 107, which may be a real-time computing and controlling system, realized in FPGA form, for example. The wireless communication system 109 is used to transmit out the measurement results to the viewing device.

The present disclosure is mainly focused on the use of the first pair of cameras for measuring the club and ball movement right before and after the impact. Using a pair of synchronized cameras (e.g., cameras 101A, 101B), together with the club head 3D scanning data, the club head and ball movement may be reconstructed in 3D space with very high accuracy. The reconstruction may use stereo vision techniques.

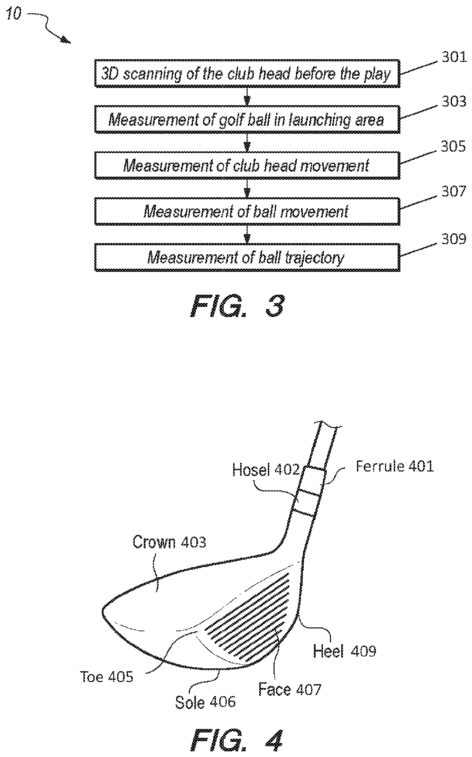

FIG. 3 shows the sequence 10 of the measurement during a golf play using the system, in accordance with one embodiment. The first step is before the player starts playing with a club that is not registered with the system, he/she is instructed to put the club head before the measuring device, whereupon the system works in a 3D scanning mode to scan the club head (301). Using structure lighting and two cameras, when the user turns the club head around, a series of stereo images pairs with known lighting patterns are captured. Using existing computer vision techniques, a 3D model of the club head can be re-constructed with sub-millimeter level accuracy.

Also before the play, the system will search for the golf ball in a launching area and do 3D measurement of the static golf ball (303). This information will be used for accurate modelling of the ball and accurate calculation of impact time.

Then the player is ready to play with the registered club. During each swing, the measuring device enters measurement mode and automatically captures the images and performs measurement on both the club and the ball (307, 309).

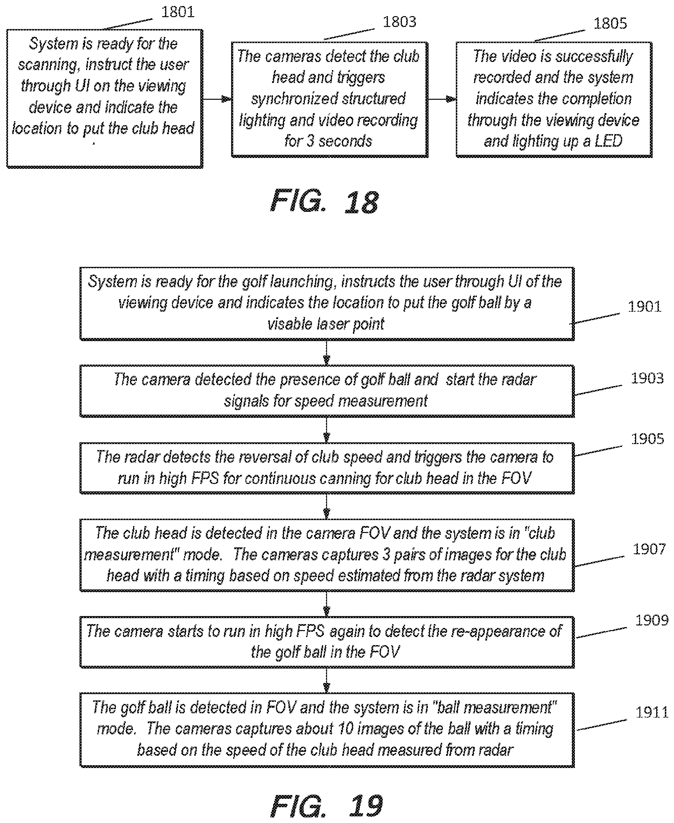

Further details of the steps of FIG. 3 are shown in FIGS. 18, 19 and 20.

Referring to FIG. 18, when the system is ready for club head scanning, the user is instructed through a user interface (UI) on the viewing device, which indicates to the user where to position the club head for scanning (1801). The cameras 101A, 101B detect the club head, triggering synchronized structured lighting and video recording for an interval, e.g., 3 second (1803). The video is successfully recorded, and the system indicates completion through the viewing device, and (optionally) by lighting up an LED.

Referring to FIG. 19, where the system is ready for golf launching, it instructs the user through UI of the viewing device and indicates a locating to put the golf ball, e.g., using a visible laser point (1901). The cameras 101A, 101B detect the presence of the golf ball and start radar operation for club speed measurement (1903). The radar detects a reversal of club head speed and triggers the cameras 101A, 101B to run in a high-FPS mode for continuous image capture to capture the club head in the field of view (FOV) (1905). When the club head is detected in the camera FOV, the system enters "club measurement" mode (1907). The cameras 101A, 101B then capture some number of image pairs of the club head with timing being based on club head speed estimated by the radar system. Thereafter, the cameras 101A, 101B start to run in high-FPS mode again to detect re-appearance of the golf ball in the FOV following impact (1909). When the golf ball has been detected in the FOV, the system enters "ball measurement" mode (1910). The cameras 101A, 101B capture some number of pairs of images (e.g., 10) of the golf ball with timing being based on club head speed estimated by the radar system.

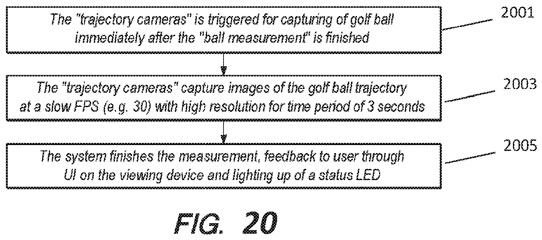

Referring to FIG. 20, after "ball measurement is finished," a "trajectory cameras" mode is triggered (2001). The trajectory cameras 103A, 103B capture images of the golf ball trajectory in a low-FPS (e.g., 30 FPS) mode with high resolution for a timer period (e.g., three seconds) (2003). The system finishes the measurement and provides feedback to the user through UI and the viewing device and (optionally) by lighting up of a status LED (2005).

For the measurement of the ball movement, further details of suitable methods are described in previous patents of the present assignee, including US Patent 9,171,211 B2, incorporated herein by reference. The measurement of the ball trajectory may likewise incorporate known techniques. The present description mainly focuses on methods for measurement of the club movement.

The measurement of the attack angle, club path and speed may be performed by measuring the 3D position of the center of gravity (COG) of the club head, which is very near to the center of the pixels of the club head in the image domain. The speed measurement accuracy can be further improved with the measurement from the radar. The 3D position for each pair of images at every time sample may be determined by measuring the difference between the center of the club head pixels. Traditional stereo vision method can be applied to deliver sub-millimeter accuracy.

As the system is observing the club head from the back, the 3D orientation of the club face needs to be determined by a 3D registration procedure. With the 3D data of the club head from the previous 3D-scanning process, the club face position and orientation at each and every frame can be accurately determined with a 3D registration process.

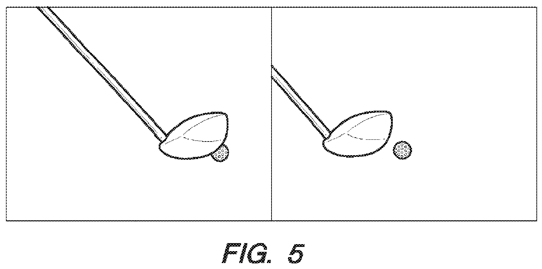

FIG. 4 illustrates parts of a known club head, including ferrule 401, hosel 402, crown 403, toe 405, sole 406, face 407 and heel 409. There are multiple approaches for the 3D registration process, two examples of which will be described. The first approach is based on two sources of data: 1) measurement of a 3D line segment between hosel and ferrule on the club shaft, which does not bend during the swing, using stereo vision techniques; and 2) the location of features, such as the silhouettes, observed by the two cameras. Both of these can be measured accurately using the images captured by stereo system as shown in FIG. 5. With a 3D model of the club head generated from the 3D scanning, software techniques are used to find a 3D orientation (together with the 3D position) of the 3D model that best matches with the two observations at any time instance. The RMS error of this estimation method is less than one degree in 3D space. With this registration done, the lie angle is also determined with accuracy of less than one degree.

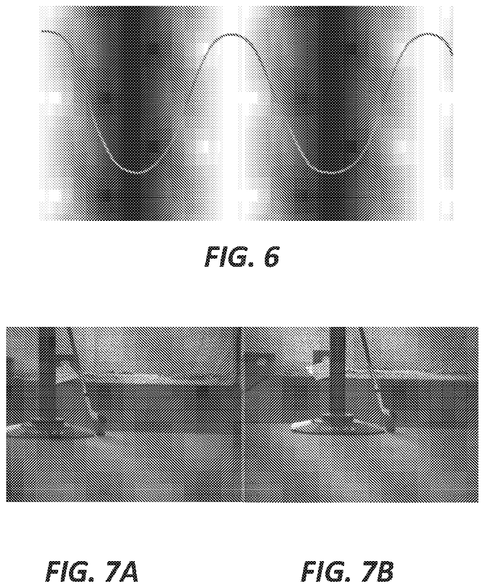

The second approach requires a marker to be attached to the club shaft, near the tip region. Compared to the existing system which requires multiple stickers to be put on different locations on the club face, the marker design and placement is much easier, causes less appearance issues with the club and will not wear out as it does not contact the ball at all. At the same time, the use of a special designed marker enables a single camera solution. FIG. 6 is an illustration of a marker exhibiting a phase shift pattern of grayscale changes, with a sine wave superimposed thereon. A design pattern of the marker helps to determine the rotation angle around the shaft axis very accurately. The pattern (named "phase shift") may be used to enable image processing to measure the rotation angle with 0.5 degrees accuracy when observed at a distance of about 2 meters. With the shaft 3D position accurately measured with the stereo camera system, together accurate measurement of the rotation angle using this pattern, the face orientation may be determined with 1-degree accuracy using the 3D registration process.

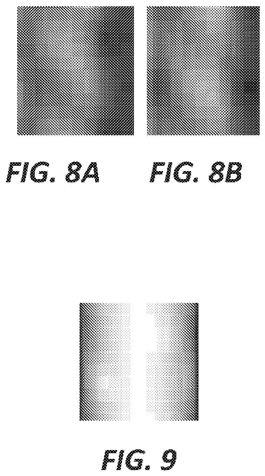

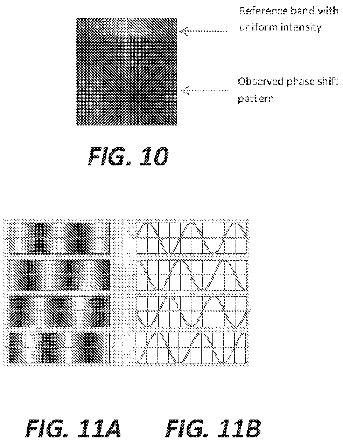

FIG. 7A and FIG. 7B show a stereo image pair with the marker attached to a club. The marker region can be first detected and rectified using image processing techniques such as edge detection, feature detection, rotation estimation and perspective correction, which give rise to the rectified observations of the marker as shown in FIG. 8A and FIG. 8B. These observations may be further processed to remove the reflectance variation caused by the cylindrical shape of the shaft, as illustrated by the theoretic model shown in FIG. 9. In practice, the reflectance variation can be measured with a reference band of uniform intensity value as shown in FIG. 10. The upper part 1001 of the image is the uniform white color band used as reference. The observed variance in the grayscale value in this band can be used to correct the reflectance variation in the observed phase shift pattern 1003. This reference-based method can be more accurate than using the theoretical model, as the latter does not include factors such as wavelength of the light source, the reflectance coefficient of the marker, the camera response function etc., which are all included in the direct measurement.

With the reflectance variation compensated, the observed markers may be correlated with the designed phase pattern using a FFT (Fast Fourier Transformation) registration method, which can give the accuracy of one tenth of a pixel; in contrast, conventional edge detection can only give up to half a pixel accuracy in such lighting conditions. This shift in pixels is finally converted to the rotation angle around the center axis of the shaft with known marker size and optics of the imaging system. The correspondence between this angle value and the club face orientation is established in the 3D scanning phase, thus in the measurement phase, this rotational angle, together with the 3D position & orientation of the shaft, can be directly translated into the 3D face angle, with the known 3D model of the club.

To increase the robustness of the system, instead of using a 1D phase-shift pattern, a few phase shift patterns with different phases can be stacked in a pre-defined sequence to form a 2D pattern, as shown for example in FIGS. 11A and 11B. This arrangement will increase the robustness of the system as there is more information coded in the pattern; it also has the potential of increasing the measurement accuracy by averaging among the multiple readings (for example, four in the illustrated case).

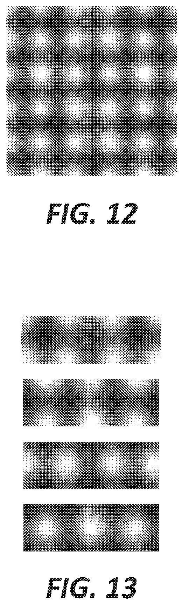

Alternatively, a phase shift pattern may be used that is modulated in two dimensions as illustrated in the FIG. 12. By use the phase shift method in two dimensions, it is possible to detect a reference point, for example the center of the brightest spot, with very high accuracy in both directions. With the original dimensions of the patterns and the optics of the imaging system known, it is then possible to estimate both the distance (via changes in the spaces between grids of such feature points) and 3D orientation (via the distortion pattern formed by the grids) of the shaft, in addition to the rotation angle around the shaft (via phase shift in one dimension). This capability removes the need for a stereo camera system and enables a single camera solution for club measurement. This approach can also be applied to other sports such as baseball, where the bat's orientation and distance measurement are critical.

This 3D grid pattern can be arranged/stacked in various ways to improve robustness and accuracy as illustrated in the FIG. 13.

As the golf ball is blocked by the club head when viewed from the system, the time of impact (the maximum compression time) can only be estimated from the ball movement. The ball is not moving before the impact instance and its 3D position can be measured using the stereo vision method very accurately. With the ball's 3D position measured when it is first seen and the balls speed measured using following frames, the time of impact can be estimated with an accuracy of 0.1ms level based on the fact that the ball moves at a constant speed after the impact. This timing information is important for at least two reasons: 1) the club parameters need to be reported exactly at this time point; 2) the impact position on the club face can be estimated accurately for purposes of face angle compensation.

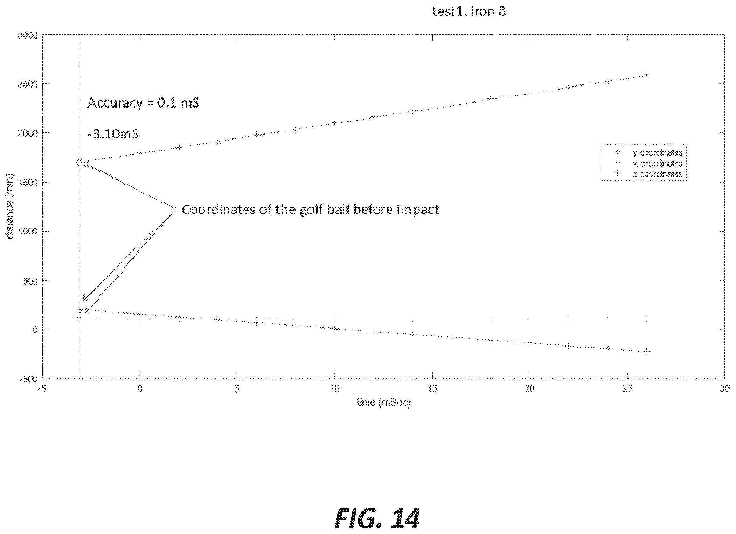

FIG. 14 illustrates the estimation of impact instance based on the measurement of initial position and moving trajectory of the golf ball (after the occlusion by the club head), for a real case. In this figure, time 0 is the capturing time of the first frame in which the golf ball is moving out of the occlusion of the club head. Based on ball speed, the impact time is determined to have been -3.10ms.

With this impact time estimated accurately, the related 3D position of the club head and ball at this instance can be calculated accurately. Using the 3D model, the face angle and impact position can be reported accurately. Unlike existing systems, this face angle already compensates the club face angle variation of wood and drivers.

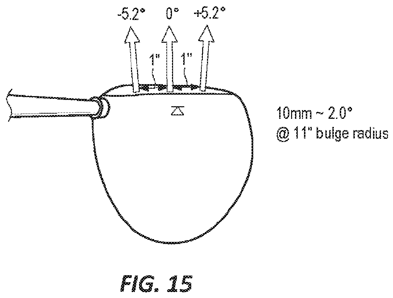

The club face angle variation along the surface for wood and drivers, also known as the bulge and roll factor, is illustrated in FIG. 15. The face angle orientation is dependent on the location of the club face. In the case of an 11-inch bulge radius, in the illustrated example, a distance of 10mm across the club face corresponds to a difference of two degrees of a line perpendicular to the club face. In existing systems, this variation commonly leads to an error of the reported face angle, as this information is not available, and a flat surface is assumed. However, with the 3D model available in the present system and the impact position accurately measured, this error is automatically removed.

With the methods described, all the club related data can be measured as shown in Table 1. Together with the 3D model of the club head, the simple model of the golf ball and ball parameters (measured, for example, using methods similar to those described in US Patent 9,171,211 B2), the 3D scene of the golf ball launch can be fully reconstructed with high accuracy. As there are different types of golf balls, some parameters, such as the exact diameter, may be obtained from the ball measurement result.

**Table 1. The club parameters definition and measurement method**

| Club Parameters to be Measured | Definition | Measurement Method |
|---|---|---|
| Club Head Speed | The speed the club head is traveling immediately prior to impact | Stereo Vision on Club Head (COG) + Radar |
| Attack Angle | The vertical direction of the club head's geometric center movement at maximum compression of the golf ball | Stereo Vision on Club Head (COG) |
| Club Path | The direction the club head is moving (right or left) at impact | Stereo Vision on Club Head (COG) |
| Impact Position on Club Face | The contact position of the ball on the club face at impact | Sweep path + impact instance estimation + 3D registration |
| Club Face Impact Angle | The direction the club face is pointed at impact (right or left) | Impact position + 3D model |
| Dynamic Lie at Impact | The angle between the center of the shaft and the sole of the club | Stereo vision + 3D registration |
| Club Impact Angle | The angle of the club at impact (up or down) | Impact position + 3D model |
| Swing Duration | The length of time from the start of the backswing through the completion of the golf swing | Stereo vision + Radar |

This 3D reconstruction can be realized with 3D tools like OpenGL, with input of the 3D model of the club head, the ball and the measured parameters about the movement of the head and the ball. The purpose is to allow the player to examine the movement of the club and ball in theoretically infinite fine details in both space and time to understand the relationship between the final delivery performance and the control on the club. In this way, the player can improve his/her performance more effectively.

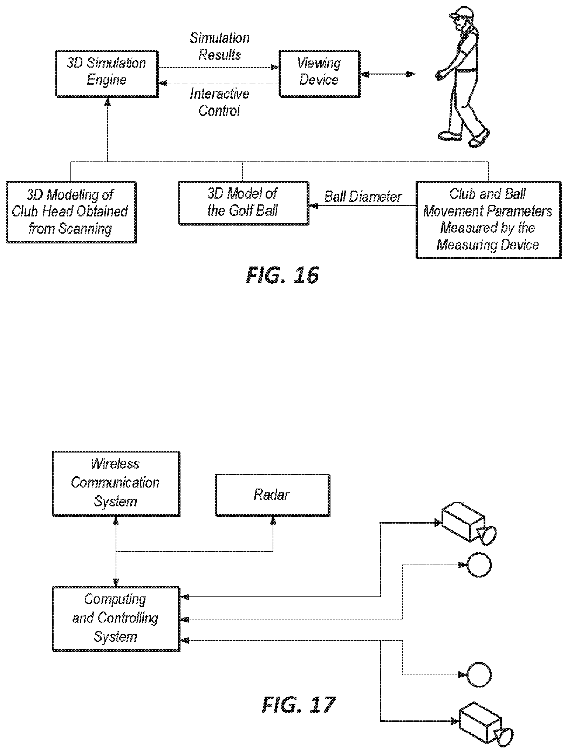

FIG. 16 is a block diagram illustrating 3D reconstruction of the full launching scene in accordance with an exemplary embodiment. A 3D model 1601 of the club head obtained from scanning, a 3D model 1603 of the golf ball, and club and ball movement parameters 1605 measured by the measuring device are input to a 3D simulation engine 1607. The 3D model of the golf ball may be based on a ball diameter measured by the measuring device 110. The 3D simulation engine produces simulation results 1609, which may be viewed by the user on the viewing device 120. The UI of the viewing device provides for interactivity, whereby interactive control inputs 1611 are provided to the 3D simulation engine 1607. New simulation results are then produced and displayed accordingly.

Using a sticker and image processing as described above, the requirements of stereo camera systems may be removed. This change simplifies the system and reduces the cost. The 3D information provided by the stereo system is lost. However, 3D measurement can still be done. First, 3D scanning can be realized with a single camera and the structured lighting of a 2D pattern with the club head rotating a full revolution before the camera. In addition, the first camera observing the club movement can deduce the distance and 3D orientation of the shaft and the orientation around the shaft based on the observed 2D phase shift marker. For the second camera observing the golf ball, again the distance information can be estimated from the observed golf ball size, which has an inverse relationship with the distance from the camera. A much simpler hardware design results, as shown in FIG. 17. As compared to the system of FIG. 2, the camera pairs 101A, 101B and 103A, 103B are replaced by single cameras 1701 and 1703. In still other embodiments, the functions of the cameras 1701 and 1703 may be performed by a single multi-function camera.

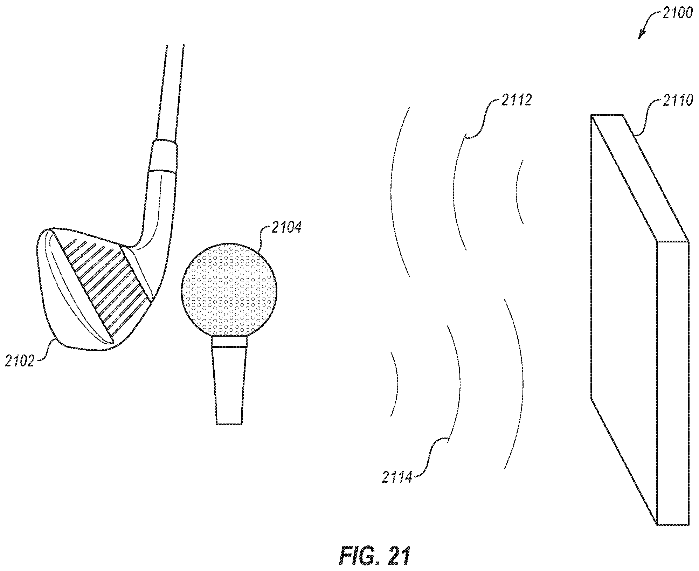

FIG. 21 is a block diagram of an alternative golf launch monitoring system 2100, in accordance with at least one embodiment of the present disclosure. The golf launch monitoring system 2100 may include a club 2102, a ball 2104, a sensor device 2110, transmitted signals 2112, and received signals 2114.

In some embodiments, the club 2102 may include a golf club. Alternatively or additionally, embodiments of the present disclosure may be used in conjunction with other similar objects or devices similar to a golf club, such as a hockey stick, a baseball bat, a tennis racket, and/or other similar equipment.

In some embodiments, the ball 2104 may include a golf ball. Alternatively or additionally, the ball 2104 may include other types of balls that may be configured to be struck by the club 2102. For example, the ball 2104 may include a whiffle ball and/or other lightweight training balls. Alternatively or additionally, the ball 2104 may include objects that may not be circular, such as a hockey puck. Alternatively or additionally, the golf launch monitoring system 2100 may be configured to operate without the ball 2104. For example, the golf launch monitoring system 2100 may be configured to produce club parameters based on the club 2102 and the associated motions thereof.

In some embodiments, the sensor device 2110 may include one or more radar devices and/or a camera device. Alternatively or additionally, the one or more radar devices and/or the camera device may be disposed in separate sensor devices and/or may be disposed in separate locations. For example, the sensor device 2110 may include the one or more radar devices and may be disposed toward and/or orthogonal to the swing direction of the club 2102, and a second sensor device (not pictured) may include the camera and may be disposed in-line and behind the swing direction of the club 2102. Alternatively or additionally, multiple radar devices may be included in the golf launch monitoring system 2100 such that at least one radar device may be disposed and/or orthogonal to the swing direction of the club 2102 and at least one radar device may be disposed in-line and behind the swing direction of the club 2102. Alternatively or additionally, the camera may be disposed orthogonally to the swing direction of the club 2102.

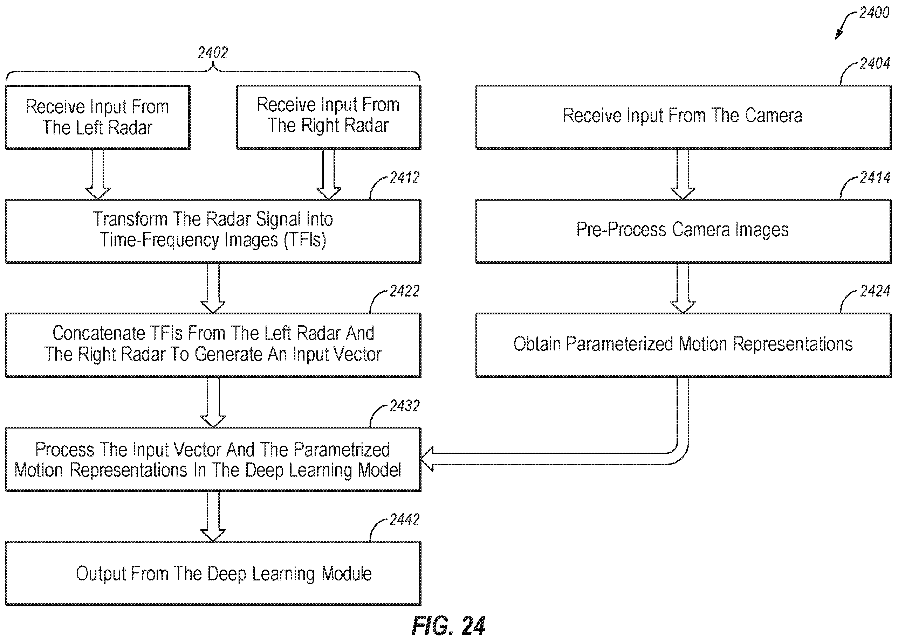

In some embodiments, processing related to the golf launch monitoring system 2100 may be performed by a processing device within the sensor device 2110. For example, the sensor device 2110 may include a processor, a memory, and/or instructions that may be capable of reading, storing, and/or executing instructions that may be used to transmit, receive, and/or process the signals from the sensor device 2110. Alternatively or additionally, data obtained by the sensor device 2110 may be saved and/or transmitted to a remote device where further processing may occur, such as the method 2400 described in FIG. 24. For example, the sensor device 2110 may include one or more systems that may be configured to transmit data to a remote device, such as a wired connection including an ethernet or a serial connection, or a wireless connection such as Bluetooth^{®}, Wi-Fi, WiMAX, cellular communications, and/or other similar wireless networks.

In some embodiments, the transmitted signals 2112 may include radio frequencies emitted from the radar of the sensor device 2110. In some embodiments, the transmitted signals 2112 may be continuously emitted from the sensor device 2110 once powered on. Alternatively or additionally, the transmitted signals 2112 may be emitted from the sensor device 2110 upon receiving a triggering input. For example, the transmitted signals 2112 may be configured to start emitting upon detecting movement in front of the sensor device 2110.

In some embodiments, the received signals 2114 may include one or more transmitted signals 2112 that may have reflected off an object and may be received by the sensor device 2110. For example, the radar device of the sensor device 2110 may emit signals, such as the transmitted signals 2112 which may reflect off an object, such as the club 2102, which reflected signal, such as the received signals 2114, may be received by the sensor device 2110.

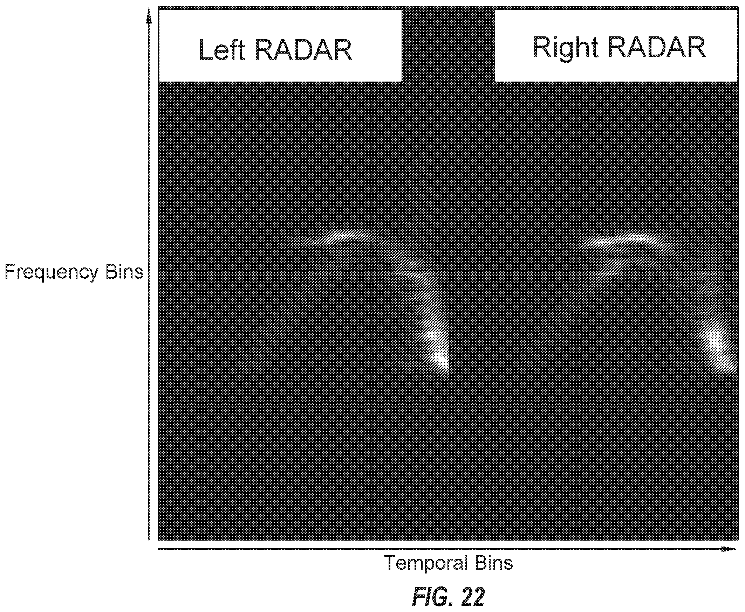

FIG. 22 is a time-frequency image (TFI) of a club in motion. In some embodiments, the concatenated time-frequency image may be an input vector to a deep learning module, such as the deep learning module described in FIG. 24. Although shown as two radar images in the TFI, there may only be a single radar image or there may be more than two radar images. In instances in which there are more than one radar image, the input vector may include a concatenation of all radar images into a single TFI input vector. Alternatively or additionally, in instances in which there are more than one radar image, the input vector may include an equal number of TFI input vectors to the number of radar images.

In some embodiments, the TFI may include a processed radar signal. For example, a continuous time series radar signal may be transformed into a TFI using a Fourier analysis. In some embodiments, the TFI may include a frequency distribution along a y-axis and the TFI may include a time distribution along an x-axis. For example, the TFI may illustrate the frequency spectrum of the club movement distributed over time.

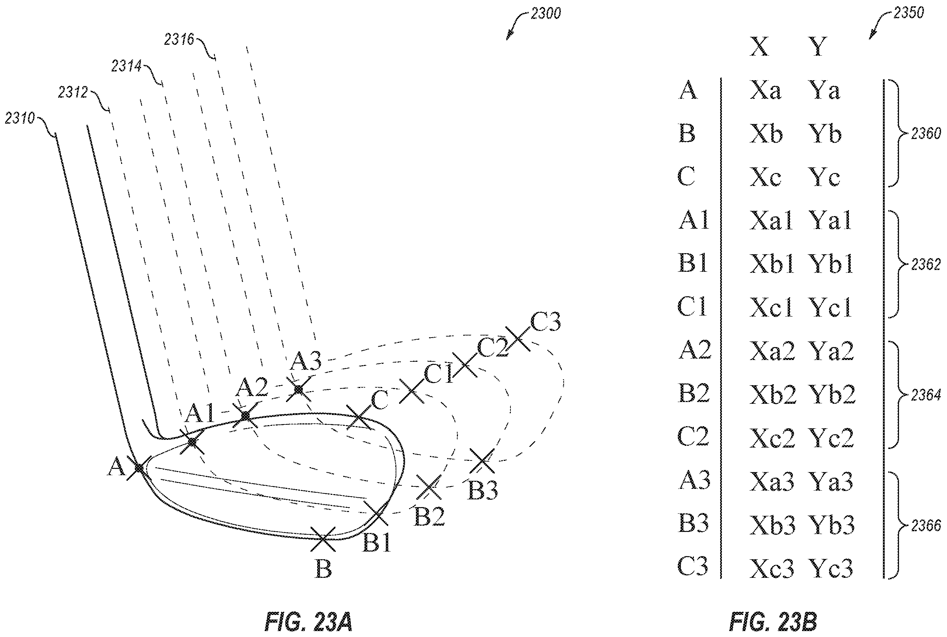

FIG. 23A and FIG. 23B are a series of images of a club 2300 and an associated table of point locations captured from the series of images of the club, respectively, in accordance with at least one embodiment of the present disclosure.

FIG. 23A illustrates a series of images 2300 of a club in motion as may be captured by a camera. In some embodiments, the series of images 2300 may include a first image 2310, a second image 2312, a third image 2314, and a fourth image 2316. Although the first image 2310 illustrates an image of a club in motion, the object captured in the series of images 2300 may include a different club, such as the club 2102 of FIG. 21, and/or any other object that may be in motion, that may be captured by the camera.

In some embodiments, the camera may be used in conjunction with a lighting unit to obtain the series of images 2300 of the club in motion. The lighting unit may include a flash device, a constant emitter of light, and/or combinations thereof, which may include multiple light sources.

In some embodiments, the first image 2310 may include an image of the club in motion at a first instance of time. In some embodiments, the camera may be configured to capture the first image 2310 of the club in motion based on a threshold. For example, the camera may capture the first image 2310 after the club in motion passes a location threshold, or after the club in motion passes a velocity threshold. In some embodiments, the location threshold may include locations adjacent to or near a second object that may be contacted by the club in motion. Alternatively or additionally, the velocity threshold may include instances in which the club in motion is travelling at or near speeds associated with a swing motion. For example, in instances in which the swing to be captured is a golf swing, the velocity threshold may not be triggered in the back swing, but may be triggered during the downswing, during which the velocity of the club in motion may be greater than the velocity of the backswing.

In some embodiments, the second image 2312, the third image 2314, and the fourth image 2316 may include images captured by the camera at three different time intervals following the first image 2310, respectively. FIG. 23A illustrates the second image 2312, the third image 2314, and the fourth image 2316 as dotted line representations of the first image 2310 to indicate the second image 2312, the third image 2314, and the fourth image 2316 occur after the first image 2310.

In some embodiments, the distance between the series of images 2300 may be a constant value, which may be determined by a setting on the camera. For example, the camera may be configured to a set number of images over a given period of time (such as 100 FPS). In instances in which the swing is nearly a constant velocity, the distance between the series of images 2300 may be similar. Alternatively or additionally, the series of images 2300 may include a variable distance between them, such as the distance between the first image 2310 and the second image 2312 may differ from the distance between the third image 2314 and the fourth image 2316. For example, the camera may be configured to take the series of images 2300 at a variable rate, such as more images may be captured as the club in motion nears a contact point with another object. Alternatively, the club in motion may include a non-constant swing velocity which may result in variable distances between the series of images 2300.

In some embodiments, the first image 2310 may include multiple points identified on the club. For example, the first image 2310 includes measured points A, B, and C on the club at various locations. As illustrated, measured points A, B, and C are located at an attachment point of the shaft to the head of the club, at the sole of the club, and at the toe of the club, respectively. It may be understood that these measured points are for illustrative purposes only and that more or less measured points may be used and may be disposed at different locations on the club.

Alternatively or additionally, each image of the series of images 2300 after the first image 2310 may include successive measured points. The successive measured points may correspond to the club in motion at different time intervals. For example, measured points A1, B1, and C1 of the second image 2312 may include measured points at the same locations as measured points A, B, and C, respectively, of the first image 2310. Additionally, the measured points A1, B1, and C1 may occur at a first time interval after the measured points A, B, and C of the first image 2310 are captured. Measured points A2, B2, and C2 may correspond with the third image 2314 and may occur at a second time interval after the measured point A, B, and C of the first image 2310. The measured points A2, B2, and C2 may follow the measured point of the first time interval (i.e., measured points A1, B1, and C1). Similarly, measured point A3, B3, and C3 may correspond with the fourth image 2316 and may occur at a third time interval after the measured points A, B, and C of the first image 2310. The measured points A3, B3, and C3 may follow the measured point of the second time interval (i.e., measured points A2, B2, and C2).

In these and other embodiments, the measured points for the series of images 2300 may be captured in the table 2350 of FIG. 23B.

FIG. 23B illustrates a table of measured points 2350, which measured points may be obtained from the series of images 2300 of the club in motion, as described relative to FIG. 23A. In some embodiments, the table of measured points 2350 may include first coordinates 2360, second coordinates 2362, third coordinates 2364, and fourth coordinates 2366.

The table of measured points 2350 may represent parameterized motion representations of the club as captured by the camera, such as the measured points from the series of images 2300 of FIG. 23A. For example, the first coordinates 2360 may be associated with the first image 2310 of FIG. 23A. Each additional coordinate set of the table of measured points 2350 may be associated with a subsequent image from the series of images 2300 of FIG. 23A, i.e., the second coordinate set 2362 may be associated with the second image 2312 at a first time interval, the third coordinate set 2364 may be associated with the third image 2314 at a second time interval, and so forth. In some embodiments, the table of measured points 2350 may include an X coordinate and a Y coordinate for each measured point. Alternatively or additionally, the table of measured points 2350 may include more or less variables that may correspond to the location of each measured point.

Alternatively or additionally, the table of measured points 2350 may include representations of motion, such as optical flow representations. For example, the table of measured points 2350 may include one or more indications of motion of the club including apparent velocities of the club, which may be estimated from the series of images of the club in motion.

In some embodiments, the measured points of the club (e.g., the first coordinates 2360, the second coordinates 2362, etc.) may include distinct points located on the club, such as the heel, the toe, the crown, a point where the club shaft attaches to the club head, and/or other points of the club. Alternatively or additionally, the measured points of the club may include one or more edges of the club, such as a top edge or a bottom edge. In some embodiments, the measured points of the club may be extracted from a series of images of a club in motion, such as the series of images 2300 described relative to FIG. 23B, using an edge detection algorithm, including first order methods such as Canny edge detection, gradient operators with threshold and linking, etc., and second order methods such as differential approaches, phase stretch transforms, etc.

FIG. 24 is a flow diagram of an example method 2400 of determining golf club parameters, in accordance with at least one embodiment of the present disclosure. One or more operations of the method 2400 may be performed, in some embodiments, by a device or system, such as the computing and controlling system 107 of FIG. 2 or another device, combination of devices, or system. In these and other embodiments, the method 2400 may be performed based on the execution of instructions stored on one or more non-transitory computer-readable media. Although illustrated as discrete blocks, various blocks may be divided into additional blocks, combined into fewer blocks, or eliminated, depending on the desired implementation.

The method may begin at block 2402 where input from the radar may be obtained. For example, a radar signal may be transmitted in the direction of the player that may contact and be reflected from the club. In some embodiments, the radar signal may include a continuous time series signal. In some embodiments, one radar device may be used to transmit a radar signal and receive the reflected club signal. Alternatively or additionally, more than one radar may be implemented at block 2402. For example, a first radar signal may be transmitted by a first radar and a second radar signal may be transmitted by a second radar, and after transmitting, the first radar may receive a first reflected signal and the second radar may receive a second reflected signal from a club positioned substantially in front of the first radar and the second radar. Alternatively or additionally, multiple radars may be configured to operate cooperatively to transmit radar signals and receive reflected signals. For example, the first radar may be configured to transmit the first radar signal and the second radar may be configured to receive the first reflected signal.

At block 2404, input from the camera may be obtained. For example, the camera may be configured to capture one or more images of the club. In some embodiments, the camera may be configured to capture a portion of a swing of the club. Alternatively or additionally, the camera may be configured to capture the club throughout all or substantially all of the swing of the club.

In some embodiments, block 2404 may be performed simultaneously with block 2402. For example, the camera may be configured to capture images simultaneously with the radar capturing a radar signal. Alternatively or additionally, block 2404 may be performed before or after block 2404. In these and other embodiments, block 2402 and block 2404 may be performed during the same motion of the club.

At block 2412, the received radar signal from the one or more radars may be transformed into a TFI. For example, a Fourier transform may be used with a continuous time radar signal which may generate a TFI. In instances in which more than one radar signal is received and configured to be transformed, each received radar signal may be transformed into a TFI such that the number of TFI's may be equal to the number of received radar signals.

At block 2414, the one or more images from the camera may be processed. In some embodiments, processing the images may include identifying distinctive portions of the club in motion, which may include the heel, the toe, the crown, a point where the club shaft attaches to the club head, etc. Alternatively or additionally, the processing the images may include implementing an algorithm that may identify distinctive portions of the club in motion. For example, the algorithm may include an edge detection algorithm, such as described above relative to FIGS. 23A and 23B. Alternatively or additionally, other forms of computer vision may be implemented that may be used to process the images which may include corner detection, interest point detection, blob detection, and/or other computer vision processing techniques.

In some embodiments, block 2414 may be performed simultaneously with block 2412. For example, the images from the camera may be processed at substantially the same time the radar input is transformed into the TFI. Alternatively or additionally, block 2414 may be performed at any time after receiving the images from the camera at block 2404.

At block 2422, the received TFI, as generated in block 2412, may be configured to be an input vector to a deep learning module. In some embodiments, the input vector may include a concatenation of multiple TFI's into the input vector. For example, in instances in which two radar signals are transformed into two TFI's, the two TFI's may be joined into a single input vector. In some embodiments, the input vector may include formatting the received TFI to a predetermined size, orientation, layout etc. For example, in instances in which one radar signal is transformed to one TFI, the input vector may include a first size. In instances in which two radar signals are transformed into two TFI's, the two TFI's may be trimmed in size and concatenated together such that the input vector may include the first size, such that the size of the input vector is substantially similar between a one radar signal input vector and a two radar signal input vector. Alternatively or additionally, the input vector size of one TFI may be smaller than the input vector size of two TFI's and an additional input with the input vector may identify the input vector size difference. In some embodiments, the input vector may include metadata associated with the TFI, the radar signal, or combinations thereof. For example, the input vector may include a time stamp of when the radar signal was obtained, an indication of the number of TFI's included, etc.

At block 2424, the processed images from block 2414 may be used to obtain parameterized motion representations of the club in motion. In some embodiments, the motion representations may include generating a table. The table may be similar to the table described in FIG. 23B. For example, the table may include one or more points, edges, corners, etc., associated with one or more positions on the club, as the club varies due to motion. Alternatively or additionally, the parameterized motion representations of the club in motion may include one or more metrics that may be used to capture and/or illustrate optical flow. For example, one or more positions on the club may be represented by one or more vectors, the vectors having at least a magnitude and a direction.

In some embodiments, block 2424 may be performed simultaneously with block 2422. For example, the parameterized motion representations of the processed images may be generated at substantially the same time as the one or more TFI's are converted into the one or more input vectors. Alternatively or additionally, block 2424 may be performed at any time after receiving the processed images from block 2414.

At block 2432, the input vector obtained from the radar and/or the parameterized motion representations obtained from the camera may be provided as inputs to the deep learning module. In some embodiments, the input vector and the parameterized motion representations may be combined prior to being inputted to the deep learning module. For example, parameterized motion representations of a first swing may be combined with the input vector of the first swing, such that when inputted to the deep learning module, the parameterized motion representations and the input vector are associated with each other and the deep learning module may associate the two inputs with the same first swing. Alternatively or additionally, the input vector and the parameterized motion representations may be inputted to the deep learning module as two separate inputs. In instances where the input vector and the parameterized motion representations are two separate inputs, the input vector and the parameterized motion representations may include time tags, location tags, iteration tags, and/or other identifying data that the deep learning module may use to correlate the input vector and the parameterized motion representations as coming from the same swing.

In some embodiments, the input vector and the parameterized motion representations may be used to train the deep learning module. For example, one or more known club parameters may be provided as inputs to the deep learning module in conjunction with the input vector and/or the parameterized motion representations such that the deep learning module may associate the input vector and the parameterized motion representations with the one or more known club parameters. For example, the deep learning module may be configured to identify one or more prominent features of the club, changes to the club (including the prominent features thereof) in time as the club moves, relation between various elements of the club, etc., which may be used to identify the club and/or the associated club characteristics.

Alternatively or additionally, the deep learning module may be configured to determine club parameters based on received input such as the input vector and/or the parameterized motion representations. For example, in instances in which the deep learning module has been trained on a dataset of club parameters, additional inputs to the deep learning module, including input vectors and/or the parameterized motion representations of a club, may be used to determine one or more club parameters by the deep learning module. In some embodiments, the deep learning module may determine the one or more club parameters based on a comparison of the input vector and/or the parameterized motion representations to one or more known club parameters that may have been provided to the deep learning module as part of a dataset training. Alternatively or additionally, in instances in which the input vector and the parameterized motion representations are not substantially similar to any data from the dataset training, the deep learning module may provide an estimation of the one or more club parameters based on one or more elements of similarity between the input vector and the parameterized motion representations, and the data from the dataset training.

In some embodiments, the deep learning module may include a neural network architecture. For example, the deep learning module may include a convolutional neural network, a recurrent neural network, and/or other machine learning architectures. In some embodiments, the deep learning module may be implemented in computer software, in computer hardware, and/or in combinations thereof.

At block 2442, an output from the deep learning module may produce club parameters associated with the club that was captured in motion by the one or more radar systems, such as described in block 2402, and/or the camera, such as described in block 2412. In some embodiments, the club parameters produced by the deep learning module may include club head speed, club face angle, club angle at impact, duration of club swing, impact location of a ball relative to the club, and/or other parameters related to the club, the club swing and/or the club impacting an object, such as a ball.

In some embodiments, the club parameters produced by the deep learning module may be used to generate a visual model of the club. For example, the club face angle, the club angle at impact, and/or other club related data may be used to generate a visual model of the club, such as a 3D rendering of the club prior to impact, at impact, and after impact with a ball. Alternatively or additionally, the club parameters produced by the deep learning module may be used to generate a visual model of the club in motion, such as a swing. In these and other embodiments, the visual model of the club and/or the club in motion may include a user interactive interface. For example, the visual model may include 3D renderings such that multiple views of the club and/or the club in motion may be presented and/or interacted with by the user.

It will be appreciated by those skilled in the art that the present invention may be embodied in other specific forms without departing from the spirit or essential character thereof. The disclosed embodiments are therefore intended in all respects to be illustrative and not restrictive. The scope of the invention is indicated by the appended claims rather than the foregoing description, and all changes that come within the scope and range of equivalents thereof are intended to be embraced therein.

## Claims

1. A method, comprising:
training a neural network on a set of training data that includes at least parameterized motion representations of golf clubs during golf swings and time frequency images (TFIs) of golf club swings;
capturing, with at least one camera, a series of images of a golf club during a golf swing;
converting, with a processor, the series of images into parameterized motion representations of the golf club during the golf swing, wherein the parameterized motion representations include apparent velocities of the golf club estimated based on the series of images of the golf club during the golf swing;
capturing, with at least one radar, a radar signal of the golf club during the golf swing;
converting, with the processor, the radar signal into TFIs;
inputting the parameterized motion representations and the TFIs separately into the trained neural network, wherein the neural network is configured to correlate the parametrized motion representations and the TFIs based on at least one of time tags, location tags and iteration tags as coming from same golf swing;
receiving golf club parameters and golf swing parameters as an output of the neural network; and
generating a visual model of the golf club in motion and the golf swing in a virtual space based on the output of the neural network, wherein the visual model of the golf club in motion includes a three-dimensional (3D) rendering of the club prior to impact, at impact and after impact with a ball.

2. The method of claim 1, further comprising:
scanning the golf club to obtain scanning information, wherein the scanning information includes a model of the golf club with at least millimeter accuracy.

3. The method of claim 2, wherein the set of the training data further includes the scanning information.

4. The method of claim 2, wherein the at least one camera being positioned behind and in-line to the swing direction.

5. The method of any one of claims 1-3, wherein the at least one radar being positioned orthogonally to a swing direction of the golf club.

6. The method of any one of claims 1-5, further comprising detecting one or more edges of the golf club to include in the parameterized motion representations, wherein the one or more edges comprising a top edge or a bottom edge of the golf club.

7. The method of any one of claims 1-6, wherein the radar signal is a continuous time series radar signal.

8. The method of claim 7, further comprising combining a first radar signal from a first radar and a second radar signal from a second radar into the radar signal.

9. The method of any one of claims 1-8, wherein the time-frequency images are a frequency spectrum of club head movement distributed over time.

10. The method of any one of claims 1-9, wherein the parameters of the golf club and the golf swing includes at least a club head speed, a swing duration, a club impact angle, and a club face impact angle.

11. The method of any one of claims 1-10, wherein the parameterized motion representations include a plurality of spatial coordinates corresponding to respective points on the golf club and times at which the spatial coordinates are recorded.

12. The method of any one of claims 2-11, wherein the scanning information comprises a 3D model of the golf club including a 3D position and orientation of a shaft of the golf club and an angle of orientation of a club face of the golf club.

13. The method of any one of claims 1-12, wherein the parameterized motion representations of the golf club in motion include one or more positions on the golf club represented by one or more vectors, the vectors having at least a magnitude and a direction.

14. A system comprising:
a memory; a camera and
a processor operatively coupled to the memory, the processor configured to execute operations that, when executed, cause the processor to perform the method of any one of claims 1-13.

15. A non-transitory computer-readable medium having encoded therein programming code executable by a processor of the system of claim 14, to perform the method of any one of claims 1-13.

## Patentansprüche

1. Verfahren, umfassend:
Trainieren eines neuronalen Netzwerks anhand eines Satzes von Trainingsdaten, der mindestens parametrierte Bewegungsdarstellungen von Golfschlägern während Golfschwüngen und Zeit-Frequenz-Bilder (TFIs) von Golfschlägerschwüngen beinhaltet;
Erfassen, mit mindestens einer Kamera, einer Reihe von Bildern eines Golfschlägers während eines Golfschwungs;
Umwandeln, mit einem Prozessor, der Reihe von Bildern in parametrierte Bewegungsdarstellungen des Golfschlägers während des Golfschwungs, wobei die parametrierten Bewegungsdarstellungen scheinbare Geschwindigkeiten des Golfschlägers beinhalten, die basierend auf der Reihe von Bildern des Golfschlägers während des Golfschwungs geschätzt werden;
Erfassen, mit mindestens einem Radar, eines Radarsignals des Golfschlägers während des Golfschwungs;
Umwandeln, mit dem Prozessor, des Radarsignals in TFIs;
Eingeben der parametrierten Bewegungsdarstellungen und der TFIs separat in das trainierte neuronale Netzwerk, wobei das neuronale Netzwerk dazu konfiguriert ist, die parametrierten Bewegungsdarstellungen und die TFIs basierend auf mindestens einem von Zeitmarkierungen, Ortsmarkierungen und Iterationsmarkierungen als von demselben Golfschwung kommend zu korrelieren;
Empfangen von Golfschlägerparametern und Golfschwungparametern als eine Ausgabe des neuronalen Netzwerks; und
Erzeugen eines visuellen Modells des Golfschlägers in Bewegung und des Golfschwungs in einem virtuellen Raum basierend auf der Ausgabe des neuronalen Netzwerks, wobei das visuelle Modell des Golfschlägers in Bewegung eine dreidimensionale (3D-) Wiedergabe des Schlägers vor dem Aufprall, beim Aufprall und nach dem Aufprall mit einem Ball beinhaltet.

2. Verfahren nach Anspruch 1, ferner umfassend:
Scannen des Golfschlägers, um Scanning-Informationen zu erhalten, wobei die Scanning-Informationen ein Modell des Golfschlägers mit mindestens Millimetergenauigkeit beinhalten.

3. Verfahren nach Anspruch 2, wobei der Satz der Trainingsdaten ferner die Scanning-Informationen beinhaltet.

4. Verfahren nach Anspruch 2, wobei die mindestens eine Kamera hinter und in einer Linie mit der Schwungrichtung positioniert ist.

5. Verfahren nach einem der Ansprüche 1-3, wobei das mindestens eine Radar orthogonal zu einer Schwungrichtung des Golfschlägers positioniert ist.

6. Verfahren nach einem der Ansprüche 1-5, ferner umfassend das Detektieren einer oder mehrerer Kanten des Golfschlägers, zur Einbeziehung in die parametrierten Bewegungsdarstellungen, wobei die eine Kante oder mehreren Kanten eine Oberkante oder eine Unterkante des Golfschlägers umfasst/umfassen.

7. Verfahren nach einem der Ansprüche 1-6, wobei das Radarsignal ein kontinuierliches Zeitreihen-Radarsignal ist.

8. Verfahren nach Anspruch 7, ferner umfassend das Kombinieren eines ersten Radarsignals aus einem ersten Radar und eines zweiten Radarsignals aus einem zweiten Radar zu dem Radarsignal.

9. Verfahren nach einem der Ansprüche 1-8, wobei die Zeit-Frequenz-Bilder ein über die Zeit verteiltes Frequenzspektrum der Schlägerkopfbewegung sind.

10. Verfahren nach einem der Ansprüche 1-9, wobei die Parameter des Golfschlägers und des Golfschwungs mindestens eine Schlägerkopfgeschwindigkeit, eine Schwungdauer, einen Schlägeraufprallwinkel und einen Schlägerflächenaufprallwinkel beinhalten.

11. Verfahren nach einem der Ansprüche 1-10, wobei die parametrierten Bewegungsdarstellungen eine Vielzahl von Raumkoordinaten beinhalten, die jeweiligen Punkten auf dem Golfschläger und Zeiten, zu denen die Raumkoordinaten aufgezeichnet werden, entsprechen.

12. Verfahren nach einem der Ansprüche 2-11, wobei die Scanning-Informationen ein 3D-Modell des Golfschlägers einschließlich einer 3D-Position und Orientierung eines Schafts des Golfschlägers und eines Orientierungswinkels einer Schlägerfläche des Golfschlägers umfassen.

13. Verfahren nach einem der Ansprüche 1-12, wobei die parametrierten Bewegungsdarstellungen des Golfschlägers in Bewegung eine oder mehrere Positionen auf dem Golfschläger beinhalten, die von einem oder mehreren Vektoren dargestellt werden, wobei die Vektoren mindestens eine Größenordnung und eine Richtung aufweisen.

14. System, umfassend:
einen Speicher; eine Kamera und
einen Prozessor, der operativ an den Speicher gekoppelt ist, wobei der Prozessor konfiguriert ist zum Ausführen von Operationen, die, bei Ausführung, den Prozessor veranlassen, das Verfahren nach einem der Ansprüche 1-13 durchzuführen.

15. Nicht-transitorisches, computerlesbares Medium, worin Programmiercode codiert ist, der von einem Prozessor des Systems nach Anspruch 14 ausführbar ist, um das Verfahren nach einem der Ansprüche 1-13 durchzuführen.

## Revendications

1. Procédé consistant à :
entraîner un réseau neuronal en utilisant un jeu de données d'entraînement qui comporte au moins des représentations de mouvement paramétrées de clubs de golf lors de swings de golf et des images temps-fréquence (ITF) de swings de golf ;
capturer, à l'aide d'au moins une caméra, une série d'images d'un club de golf lors d'un swing de golf ;
convertir, à l'aide d'un processeur, la série d'images en représentations de mouvement paramétrées du club de golf lors du swing de golf, dans lequel les représentations de mouvement paramétrées comprennent une estimation des vitesses du club de golf effectuée à partir d'images du club de golf prises lors du swing de golf ;
capturer, à l'aide au moins d'un radar, un signal radar du club de golf lors du swing de golf ;
convertir, à l'aide du processeur, le signal radar en ITF ;
introduire les représentations de mouvement paramétrées et les ITF séparément dans le réseau neuronal entraîné, dans lequel le réseau neuronal est configuré pour mettre en corrélation les représentations de mouvement paramétrées et les ITF en se basant sur au moins l'un des éléments suivants : tags de temps, tags de localisation et tags d'itération comme provenant du même swing de golf ;
recevoir des paramètres du club de golf et des paramètres des swings de golf issus du réseau neuronal ; et
générer un modèle visuel du club de golf en mouvement et du swing de golf dans un espace virtuel en fonction des paramètres issus du réseau neuronal, dans lequel le modèle virtuel du club de golf en mouvement comporte un rendu tridimensionnelle (3D) du club avant l'impact, au moment de l'impact et après l'impact d'un balle.

2. Procédé selon la revendication 1, consistant en outre à :
balayer le club de golf pour obtenir des informations de balayage, dans lequel les informations de balayage comprennent un modèle du club de golf avec une précision d'au moins un millimètre.

3. Procédé selon la revendication 2, dans lequel le jeu de données d'entraînement comprend en outre les informations de balayage.

4. Procédé selon la revendication 2, dans lequel la au moins une caméra est située derrière la direction du swing et alignée sur celle-ci.

5. Procédé selon l'une quelconque des revendications 1 à 3, dans lequel le au moins un radar est situé orthogonalement à une direction du swing du club de golf.

6. Procédé selon l'une quelconque des revendications 1 à 5, consistant en outre à détecter un ou plusieurs bords du club de golf à intégrer dans les représentations de mouvement paramétrées, dans lequel le bord ou plusieurs bords comprennent un bord supérieur ou un bord inférieur du club de golf.

7. Procédé selon l'une quelconque des revendications 1 à 6, dans lequel le signal radar est un signal radar sous forme de série temporelle continue.

8. Procédé selon la revendication 7, consistant en outre à combiner un premier signal radar émis par un premier radar et un second signal radar émis par un second radar pour obtenir le signal radar.

9. Procédé selon l'une quelconque des revendications 1 à 8, dans lequel les images temps-fréquence représentent un spectre de fréquences du mouvement de la tête du club réparti au fil du temps.

10. Procédé selon l'une quelconque des revendications 1 à 9, dans lequel les paramètres du club de golf et du swing de golf intègrent au moins une vitesse de tête du club, une durée de swing, un angle d'impact du club et un angle d'impact de la face du club.

11. Procédé selon l'une quelconque des revendications 1 à 10, dans lequel les représentations de mouvement paramétrées comportent une pluralité de coordonnées spatiales correspondant à des points respectifs du club de golf et ainsi qu'aux moments où les coordonnées spatiales sont enregistrées.

12. Procédé selon l'une quelconque des revendications 2 à 11, dans lequel les informations de balayage intègrent un modèle 3D du club de golf comprenant une position et une orientation 3D d'un shaft du club de golf ainsi qu'un angle d'orientation d'une face du club du club de golf.

13. Procédé selon l'une quelconque des revendications 1 à 12, dans lequel les représentations de mouvement paramétrées du club de golf en mouvement comportent une ou plusieurs positions sur le club de golf que représentent un ou plusieurs vecteurs, les vecteurs comportant au moins une grandeur et une direction.

14. Système comprenant :
une mémoire ; une caméra et
un processeur relié de manière fonctionnelle à la mémoire, le processeur étant configuré pour exécuter des opérations qui, lorsque exécutées, amènent le processeur à appliquer le procédé selon l'une quelconque des revendications 1 à 13.

15. Support lisible par ordinateur non transitoire comportant un code de programmation codé exécutable par un processeur du système selon la revendication 14, afin d'exécuter le procédé selon l'une quelconque des revendications 1 à 13.
